Europäisches Patentamt

European Patent Office

Office européen des brevets

(11) Veröffentlichungsnummer: **0 208 089**
**A1**

(12) # EUROPÄISCHE PATENTANMELDUNG

(21) Anmeldenummer: 86106498.8

(22) Anmeldetag: 13.05.86

(51) Int. Cl.⁴: **B60T 8/36**

(30) Priorität: 05.06.85 DE 3520135

(43) Veröffentlichungstag der Anmeldung:
14.01.87 Patentblatt 87/03

(84) Benannte Vertragsstaaten:
DE FR GB IT SE

(71) Anmelder: **ROBERT BOSCH GMBH**
**Postfach 50**
**D-7000 Stuttgart 1(DE)**

(72) Erfinder: **Schneider, Steffen**
**Brächterstrasse 62**
**D-7146 Tamm(DE)**

(54) **Ventileinheit für Bremsdrucksteuerung.**

(57) Es wird eine Ventileinheit (3) zur Bremsdruck-steuerung bei blockiergeschützten Druckluft-Brem-sanlagen vorgeschlagen, bei der ein 3/2-Wege-Vorsteuer-Magnetventil (5) für ein Auslaß-Hauptventil (7) nicht einen Bremsventildruck sondern eine Bremszylinderdruckabsenkung zur Außenluft steuert.

Dieser Bremszylinderdruck kann infolge der Arbeit des Blockierschutzes wesentlich kleiner sein als der Bremsventildruck, und ein Druckabbau von einem niedrigeren Druckniveau erfolgt schneller als von einem hohen Druckniveau. Es ergeben sich demnach kürzere Taktzeiten und eine exaktere Arbeit des Blockierschutzes.

EP 0 208 089 A1

## Ventileinheit zur Bremsdrucksteuerung

Stand der Technik

Die Erfindung geht aus von einer Ventileinheit zur Bremsdrucksteuerung nach der Gattung des Hauptanspruchs. Eine solche Ventileinheit ist bekannt (DE-OS 25 17 571).

Bei dieser bekannten Bauart ist zum Vorsteuern des Haupt-Auslaßventils ein Magnetventil verwendet, das zwar wie ein 3/2-Wege-Ventil aufgebaut ist, jedoch nur zwei Wege überwacht. Das Haupt-Auslaßventil hat als Schließ-und Schaltkörper eine Membran, deren Rückseite über das Vorsteuer-Magnetventil an Außenluft anschließbar ist und außerdem über eine Drosselstelle ständig an den Bremszylinder angeschlossen ist.

Eine solche Bauart hat den Nachteil, daß über die Drosselstelle Luft verloren geht, daß die Drosselstelle leicht verstopfen kann und daß in der Ventileinheit zwei verschiedene Verbindungskanäle notwendig sind zur Verbindung mit der Außenluft.

Vorteile der Erfindung

Die Ventileinheit mit den kennzeichnenden Merkmalen des Hauptanspruchs hat demgegenüber den Vorteil, daß in ihrem Gehäuse weniger Kanäle notwendig sind und daß eine Drosselstelle eliminiert ist, die leicht zu Störungen Anlaß gibt.

Dazu kommt gegenüber anderen Ventileinheiten noch der Vorteil, daß übliche lange Schaltzeiten vermieden sind. Diese entstehen, wenn aus einer Druckhaltephase heraus der Bremszylinderdruck abgelassen werden soll und der Druck im Bremszylinder wesentlich niedriger ist als der Druck vom Bremsdruckgeber. Dies ist immer dann der Fall, wenn der Fahrer den vollen Bremsdruck eingesteuert hat, der Blockierschutz in Arbeit tritt und der Bremsdruck im Bremszylinder, z.B. wegen glatter Fahrbahn, auf ein niedriges Niveau eingeregelt wurde. Da der hohe Druck vom Bremsdruckgeber über das Vorsteuerventil am Auslaß-Hauptventil als Steuerdruck ansteht, verlängern sich die Schaltzeiten erheblich.

So ist es auch ein Vorteil der vorliegenden Erfindung, daß sich durch Anstehen lediglich des Bremszylinderdruckes als Steuerdruck am Haupt-Auslaßventil die Schaltzeiten auf etwa die Hälfte verkürzen lassen.

Zeichnung

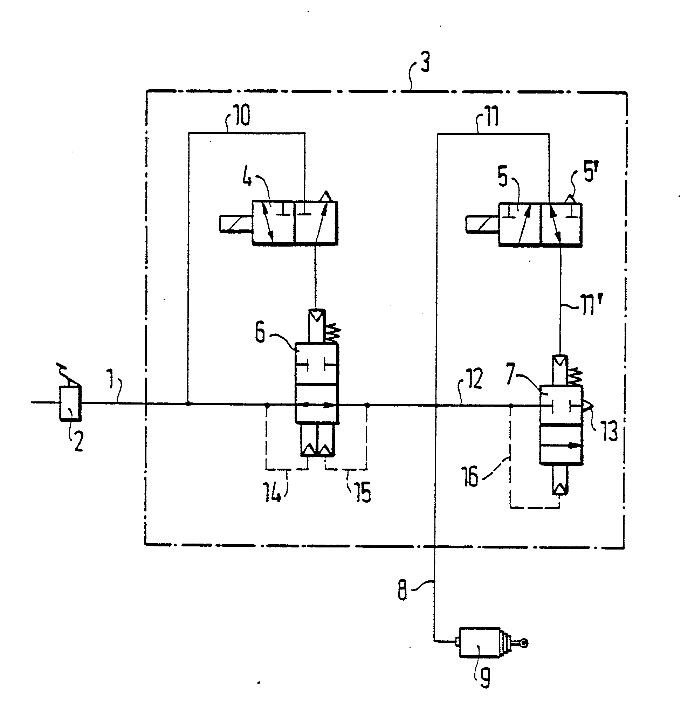

Ein Ausführungsbeispiel der Erfindung ist in der Zeichnung dargestellt und in der nachfolgenden Beschreibung näher erläutert.

Beschreibung des Ausführungsbeispieles

Wie das in der Patentzeichnung dargestellte Schema erkennen läßt, führt eine Leitung 1 von einem Bremsventil 2 zu einer Ventileinheit 3, in der zwei 3/2-Wege-Vorsteuer-Magnetventile 4 und 5 und zwei Hauptventile 6 und 7 angeordnet sind. Das Hauptventil 6 ist ein Einlaß-Hauptventil und als solches gewöhnlich offen, so daß der Bremsdruck über eine Bremsleitung 8 zu einem Rad-Bremszylinder 9 gelangen kann. Je eine Zweigleitung 10 bzw. 11 führt von der Leitung 1 zum Vorsteuer-Magnetventil 4 bzw. von der Bremsleitung 8 zum Vorsteuer-Magnetventil 5, und eine Entlastungsleitung 12 führt über das Hauptventil 7, das als Auslaß-Hauptventil arbeitet, zu einer Außenluftverbindung 13. An diese Außenluftverbindung 13 ist innerhalb der Ventileinheit 3 auf nicht näher dargestellte Weise auch eine Außenluftverbindung 5' des Vorsteuer-Magnetventils 5 angeschlossen. Die beiden Hauptventile 6 und 7 unterliegen verschiedenen Leitungsdrücken, die über die gestrichelt dargestellten Leitungen 14, 15, 16 abgegriffen werden. Die Ventileinheit 3 stellt beim gewöhnlichen Bremsen einen freien Durchgang für die Bremsluft vom Bremsventil 2 zum Bremszylinder 9 dar.

Wenn beim Bremsen der Bremsdruck im Bremszylinder 9 so hoch wird, daß das Rad zu blockieren beginnt, gibt ein nicht dargestellter Radsensor Signale ab, die nach Auswertung in einer Elektronik einen Stromimpuls zu dem 3/2-Wege-Vorsteuer-Magnetventil 4 bewirken.

Das Magnetventil 4 schaltet in seine andere Stellung um, in der es Druck zum Einlaß-Hauptventil 6 gelangen läßt. Dieses schaltet druckabhängig in seine andere Stellung, in der es einen weiteren Bremsdruckanstieg verhindert. Reicht das Festhalten des in den Bremszylinder 9 eingesteuerten Druckes nicht aus, die Blockiergefahr zu beseitigen, erhält auch das andere 3/2-Wege-Vorsteuer-Magnetventil 5 Strom und schaltet in seine andere Stellung, in der es den Steueranschluß des Auslaß-Hauptventils 7 über eine Leitung 11' zu einer Außenluftstelle 5' am Vorsteuerventil 5 entlastet, so daß das Hauptventil 7 unter dem Druck in der Leitung 16 seine Entlastungsstellung einnimmt.

Nun erfolgt Druckabsenkung im Bremszylinder 9 und zwar so lange, bis sich das Rad wieder voll dreht. Mittels der Ventileinheit 3 ist aber auch ein feinfühliges Druckabsenken durch schnelles Takten des Magnetventils möglich. Zu diesem Takten ist es notwendig, daß in der Leitung 11' zwischen den beiden Ventilen 5 und 7 ein nicht so hoher Druck herrscht, um einen schnellen Druckabbau von einem verhältnismäßig niedrigen Niveau zur Außenluft am Anschluß 5' zu erreichen.

Es ist also wichtig, daß der am Auslaß-Hauptventil 7 anstehende Steuerdruck nicht der Bremsdruck vom Bremsventil 2 ist sondern der in den Bremszylinder 9 eingesteuerte Bremszylinderdruck. Denn dieser Bremszylinderdruck kann infolge der Arbeit des Blockierschutzes wesentlich niedriger sein als der Bremsventildruck, und ein niedrigerer Druck ist schneller abzubauen als ein hoher Druck. In der Praxis hat sich gezeigt, daß damit die Schaltzeit von 20 ms auf 10 ms, also auf die Hälfte, verringerbar ist. Auf diese Weise kann dann die Blockierschutzeinrichtung mit wesentlich kürzeren Taktzeiten arbeiten, was ein exakteres Anpassen der Bremsdrücke an die Fahrbahngegebenheiten ermöglicht.

**Ansprüche**

1. Ventileinheit zur Bremsdrucksteuerung wenigstens eines Bremszylinders einer pneumatischen Bremsanlage von Kraftfahrzeugen, die in der Leitung zum Bremszylinder angeordnet ist und die ein Einlaßventil und ein Auslaßventil als Hauptventile aufweist, die unter der Wirkung mindestens eines Vorsteuer-Magnetventils mit Hilfe von Signalen eines elektronischen Steuergerätes gesteuert werden, um die Versorgung mit oder die Entlastung von Bremsdruck in der Bremsleitung zu überwachen, dadurch gekennzeichnet, daß das Vorsteuer-Magnetventil (5) des Haupt-Auslaßventils (7) ein mit zwei Stellungen drei Wege überwachendes Magnetventil ist und eine Leitungsverbindung (Leitung 11') schaltet, die lediglich unter Bremszylinderdruck einen Steuerdruck für das Haupt-Auslaßventil (7) bereitstellt und daß dieser Steuerdruck über das Vorsteuer-Magnetventil (5) zur Außenluft entlastbar ist.

2. Ventileinheit nach Anspruch 1, dadurch gekennzeichnet, daß die über das 3/2-Wege-Vorsteuer-Magnetventil (5) von dem Haupt-Auslaßventil (7) überwachte Verbindung die einzige Verbindung des Bremszylinders (9) zur Außenluft ist.

3. Ventileinheit nach Anspruch 1 oder 2, dadurch gekennzeichnet, daß das 3/2-Wege-Vorsteuer-Magnetventil (5) ein stromlos offenes Ventil ist, das in dieser Stellung die den Bremszylinderdruck führende Leitung (11') von einer Außenluftverbindung (5') abriegelt.

20043

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 234 178 (WESTINGHOUSE BREMSEN- U. APPARATEBAU) <br> * Seite 5, Zeilen 18-26; Seite 6, Zeile 15 - Seite 7, Zeile 13; Seite 8, Zeilen 7-11; Figur 1 * | 1-3 | B 60 T 8/36 |
| | --- | | |
| X | DE-A-2 541 563 (BOSCH) <br> * Figur 1 * | 1,3 | |
| | --- | | |
| X | FR-A-2 358 300 (BOSCH) <br> * Seite 3, Zeilen 10-16; Figur 1 * | 1 | |
| | --- | | |
| A | DE-A-2 810 219 (BOSCH) <br> * Figur 1 * | 2 | |
| | --- | | RECHERCHIERTE SACHGEBIETE (Int. Cl.4) |
| A | EP-A-0 060 545 (KNORR) <br> * Insgesamt * | 1 | B 60 T |
| | --- | | |
| A | DE-A-2 419 135 (BOSCH) | | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 03-10-1986 | BLURTON M.D |